# DEMANDE DE BREVET EUROPEEN

(11) **EP 4 201 208 A1**
(43) Date de publication de la demande: **28.06.2023**
(21) Numéro de dépôt: 22215710.9
(22) Date de dépôt: 21.12.2022
(51) Int. Cl.: A21C 3/04, A21C 1/00, A21C 9/08, A21C 11/20, A21C 14/00, A21C 15/00, A23L 5/00, B65G 69/20, F26B 3/04, F26B 17/12, F26B 25/00

(54) **PROCÉDÉ DE FABRICATION DE PÂTES FRAICHES, PRÉCUITES OU CUITES**

(30) Priorité: 22.12.2021 BE 202106039
(71) Demandeur: Pastificio della Mamma, 4040 Herstal (BE)
(72) Inventeur: HENRIQUES AIRES DE ALMEIDA, Jorge, 4630 Soumagne (BE); MONTAGNA, Vincent, 4041 Vottem (BE); VASSEN, Marie, 4800 Verviers (BE)
(74) Mandataire: Calysta NV

(57) **Abrégé**

Procédé pour la fabrication de pâtes à partir d'ingrédients constitutifs comprenant les étapes de : amenée d'un mélange, mise en forme du mélange pour obtenir des pâtes formées, conditionnement pour obtenir des pâtes conditionnées en portions prêtes à l'emploi, le procédé comprend entre l'étape de mise en forme et l'étape de conditionnement, un déplacement où les pâtes formées sont soumises à un flux d'air alimenté par une soufflante comprenant un premier déplacement selon une première direction et un deuxième déplacement selon une deuxième direction non parallèle à la première direction.

## Description

La présente invention se rapporte à un procédé de fabrication de pâtes à partir d'ingrédients constitutifs. La présente invention porte également sur un dispositif pour la fabrication de ces pâtes. La présente invention concerne aussi le produit à base de pâtes fraîches, précuites ou cuites.

La présente invention concerne plus particulièrement un procédé pour la fabrication de pâtes à partir d'ingrédients constitutifs comprenant les étapes d'amenée d'un mélange contenant les ingrédients constitutifs, mise en forme du mélange pour obtenir des pâtes formées, conditionnement des pâtes formées pour obtenir des pâtes conditionnées en portions prêtes à l'emploi.

Par les termes « pâtes prêtes à l'emploi », on entend des pâtes fraîches crues conditionnées en portions adéquates, destinées à être cuites chez le client, des pâtes fraîches et crues destinées à être commercialisées chez un distributeur, voire après reconditionnement en portions plus petites, des pâtes précuites prêtes à subir une cuisson légère additionnelle ou prêtes à être cuisinées et/ou accommodées, des pâtes cuites ou des pâtes précuites prêtes à être accommodées, ou encore des pâtes accommodées et cuisinées. Typiquement, au sens de la présente invention, les pâtes sont conditionnées en portion industrielles, semi-industrielles ou individuelles selon qu'elles sont destinées à une collectivité, à un fabricant de plats cuisinés, à un détaillant ou à un consommateur.

Il est bien connu de l'état de la technique la fabrication de pâtes alimentaires. Les pâtes alimentaires constituent, un des principaux débouchés de la filière de blé dur. Les pâtes alimentaires existent sous plusieurs formes (tubulaire, non tubulaire, ruban, petite pâte, pâte farcie) et peuvent être consommés différemment selon les préparations.

Les pâtes alimentaires obtenues par des procédés industriels sont classées en deux groupes selon les machines utilisées dans la ligne de production, les pâtes extrudées ou les pâtes laminées. L'extrusion permet le cisaillement et la compression, parfois avec un apport de chaleur qui permet d'évaporer l'eau et de texturer les protéines par la modification de l'amidon. Cette technique d'extrusion modifie la structure et la composition des pâtes, notamment leurs propriétés fonctionnelles et structurelles.

Le laminage de la pâte est réalisé quant à lui entre deux cylindres de tailles variés permettant de réduire la pâte en feuilles minces, la même modification structurelle se produit durant le laminage.

Les pâtes sèches sont les plus courantes dans le domaine industriel puisqu'elles peuvent se conserver facilement pendant plusieurs mois, voire années. Cela est d'autant plus facile pour les industriels que les pâtes sèches ne nécessitent pas la présence de bac de cuisson dans leur chaîne de production. Les pâtes sèches sont fabriquées avec de la semoule de blé dur, de l'eau, éventuellement des oeufs et facultativement des herbes ou d'autres additifs, la composition de la pâte avant emballage doit présenter un taux d'humidité inférieur à 12%. Le séchage est une étape clé dans la fabrication des pâtes sèches, consistant à évaporer le liquide présent dans le produit, sans altérer les propriétés nutritives et fonctionnelles du produit. En effet, le séchage des produits augmente la durée de conservation, maintient la qualité du produit dans le temps et facilite le transport.

Les pâtes fraîches ont, quant à elles, un goût plus prononcé. La composition des pâtes fraiches est règlementée et doit réunir deux conditions, le taux d'humidité doit être supérieur à 12% et la composition de la pâte doit comprendre de la semoule de blé dur de qualité supérieure classée.

Parfois, les pâtes fraiches sont commercialisées sous forme précuites ou cuites. Au niveau industriel, la pâte crue est alors amenée à une étape de cuisson ou de précuisson selon que l'on cherche à obtenir des pâtes cuites ou des pâtes précuites. L'appellation « pâte fraîche » est souvent utilisée indifféremment qu'il s'agisse de pâtes fraîches crues, cuites ou précuites. Toutefois, dans la description qui suit, nous désignerons par les termes « pâte fraîches », les pâtes fraîches crues.

Enfin, les pâtes fraîches crues, précuites ou cuites sont pasteurisées et conditionnées sous atmosphère protectrice ou inversement. L'étape de pasteurisation et de conditionnement permettent de conserver les pâtes fraîches crues, précuites ou cuites pendant plusieurs semaines au réfrigérateur.

Malheureusement, il arrive que les pâtes fraîches en sortie de laminage ou d'extrusion soient collantes, ce qui crée des problèmes dans les étapes ultérieures. En effet, dans certains cas, des agglomérats de plusieurs pâtes collées entre elles passent dans le bac de cuisson, ce qui nuit à la cuisson et crée des zones qui ne sont pas suffisamment cuites. Si les agglomérats sont plus importants, il peut se produire des colmatages dans les convoyeurs...

La présence de pâtes collées entre elles ou d'agglomérats de pâtes provient d'une part du fait que les pâtes fraiches contiennent une quantité trop importante d'eau ou bien sont trop chargées en amidon résultant de la structuration de la pâte.

Malheureusement, les pâtes sont difficilement manipulables en sortie de l'extrudeuse. En effet, elles sont fragiles et une étape supplémentaire de manipulation des pâtes dans le but d'isoler chaque pâte individuellement entrainerait des risques de contamination ou de malformation et engendrerait un surcoût.

Le document EP3050439 décrit ou § 0010 la problématique des pâtes collantes et y associe un problème d'ouvrabilité et un problème de texture à la dégustation. Selon ce document, lors de la production de pâtes fraiches en sauce, un autre problème réside dans l'absorption trop importante de la sauce par les pâtes, ce qui impacte négativement le goût des pâtes, mais aussi la texture. Selon le document EP3050439, le procédé de fabrication de pâtes fraîches cuites comprend une première étape dans laquelle les ingrédients constitutifs pour la fabrication de pâtes sont mélangés, une seconde étape consistant à extruder la pâte, une troisième étape de séchage à chaud et une quatrième étape de cuisson. La troisième étape est un traitement par chauffage à sec pour diminuer la masse de pâte fraîche après traitement entre 80 et 97% par rapport à la masse de la pâte avant traitement. Pour cela, les pâtes sont placées dans un four chauffé à 220°C pendant une période de temps prédéterminée. Les pâtes, une fois déshydratées, sont cuites soit dans la vapeur d'eau, soit dans de l'eau à ébullition.

Bien que ce document semble prometteur pour résoudre le problème des pâtes collantes et de la conservation de la texture, surtout après mise en sauce, la déshydratation des pâtes entre l'extrusion et la cuisson n'est pas avantageuse en termes de consommation d'énergie. En effet, ce procédé de fabrication comprend une étape de séchage très poussée et à chaud nécessitant un temps suffisant pour quasiment complètement sécher les pâtes avant la cuisson.

Il existe donc un réel besoin de mettre au point une méthode de fabrication de pâtes fraîches, crues, cuites ou précuites dont la consommation énergétique est réduite tout en optimisant la qualité du produit obtenu.

Pour résoudre ce problème, il est prévu suivant l'invention un procédé tel que mentionné au début qui comprend entre l'étape de mise en forme et l'étape de conditionnement, un déplacement des pâtes formées d'une zone de mise en forme vers une zone de conditionnement, le déplacement comprenant un premier déplacement selon une première direction et un deuxième déplacement selon une deuxième direction non parallèle à la première direction, durant lequel déplacement, les pâtes formées sont soumises à un flux d'air alimenté par une soufflante, ledit premier déplacement et ledit deuxième déplacement se produisant respectivement en amont et en aval d'une butée projetant les pâtes formées pour leur conférer ledit deuxième déplacement.

Comme on peut le constater, dans le procédé selon la présente invention, les pâtes en sortie d'extrudeuse sont déplacées selon deux tronçons non parallèles. Les deux tronçons se situent en amont et en aval d'un moyen de butée. Les pâtes en sortie d'extrudeuse sont donc déplacées suivant le premier tronçon et butent sur le moyen de butée. La butée dévie les pâtes en sortie d'extrudeuse et leur confère ainsi la direction ou les dévie pour qu'elles se déplacent suivant le deuxième tronçon non parallèle au premier tronçon. Durant ce déplacement et la butée, les pâtes sont soumises à un flux d'air provenant d'une soufflante. De manière extrêmement surprenante, le déplacement des pâtes formées durant lequel elles sont soumises à un flux d'air alimenté par une soufflante ainsi qu'à une butée permet d'éviter que les pâtes collent l'une à l'autre et d'éviter qu'elles forment des agglomérats, lesquels seraient problématiques pour l'ouvrabilité des pâtes et la texture à la dégustation. De plus, le flux d'air alimenté par la soufflance crée un coussin au niveau de la butée afin de ne pas endommager les pâtes qui buttent contre le moyen de butée et qui sont ainsi déviées dans le deuxième tronçon. Il a donc été mis en évidence qu'il n'est pas requis de sécher de manière très poussée les pâtes pour résoudre ce problème, un simple déplacement, combiné à une butée, durant lequel une soufflante alimente l'environnement dans lequel se déplacent les pâtes avec un flux d'air permet une grande économie d'énergie tout en laissant les pâtes intactes dans leur forme et permettant de conserver la texture à la cuisson.

De préférence, entre l'étape de mise en forme, après le déplacement, et en amont de l'étape de conditionnement, le procédé selon la présente invention comprend une étape de cuisson au moins partielle des pâtes formées pour obtenir des pâtes formées, précuites ou cuites pour pouvoir commercialiser des pâtes prêtes à l'emploi. En effet, les pâtes précuites ou cuites peuvent être utilisées directement sans cuisson, par exemple dans des salades que l'on retrouve dans les supermarchés ou encore dans des cantines.

De manière avantageuse, dans le procédé selon la présente invention, l'amenée du mélange est précédée par une étape de structuration comprenant en outre un dosage et une amenée des ingrédients constitutifs, un mélange des ingrédients constitutifs pour l'obtention d'une pâte granuleuse, et un pétrissage du mélange pour l'obtention d'une pâte homogène et lisse.

L'étape de structuration permet de développer la structure de la pâte. Au cours de la structuration, des constituants de la semoule de blé dur, par exemple, sont impliqués dans des mécanismes physico-chimiques pour obtenir une pâte de qualité. En effet, l'hydratation des constituants de la semoule permet d'assurer l'activation des protéines. Les protéines de gluten présentes dans le blé sont alors prêtes à interagir. Les protéines forment un réseau continu autour des granules d'amidon et ce réseau se désolubilise avant la gélatinisation des granules d'amidon.

De préférence, dans le procédé selon la présente invention, l'étape de mise en forme du mélange pour obtenir des pâtes formées est une extrusion au travers d'une filière d'extrusion, de préférence de la pâte homogène et lisse.

Par le terme « extrusion » selon la présente invention, on entend un procédé de mise en forme des matières, qui consiste à pousser la matière à fluidifier à travers une filière.

La température d'extrusion est importante et ne doit pas atteindre plus de 40°C. Au-delà de 40°C, la structure protéique de la pâte traversant la filière de l'extrudeuse sera trop compacte et cela entraine un risque de gélatinisation de l'amidon. Maintenir la température d'extrusion en dessous de 40°C facilite le nettoyage et permet de ne devoir utiliser que des brosses de nettoyage et sans requérir l'utilisation d'eau pour le nettoyage et ainsi éviter l'adhésion de la pâte contenant de l'amidon aux parois, ce qui se produit en présence d'eau.

Avantageusement, l'extrudeuse est positionnée de manière décalée par rapport au bac de cuisson afin d'éviter à la vapeur d'eau de pénétrer dans l'extrudeuse et de former des grumeaux collants sur les parois de l'extrudeuse et/ou de bloquer la sortie de la pâte de la filière de l'extrudeuse.

Avantageusement, dans le procédé selon la présente invention, l'étape de cuisson au moins partielle des pâtes formées pour obtenir des pâtes précuites ou des pâtes cuites formées pour obtenir des pâtes précuites ou des pâtes cuites comprend une ou plusieurs étapes parmi (i) un passage dans un bac d'eau chaude à une première température de cuisson pendant une première période de temps prédéterminée pour obtenir lesdites pâtes précuites ou lesdites pâtes cuites, (ii) une collecte des pâtes précuites ou des pâtes cuites et un passage à l'air libre des pâtes précuites ou des pâtes cuites avec pulvérisation de liquide froid à une température comprise entre 4°C et 20°C, (iii) un passage dans un bac d'eau froide à une deuxième température pendant une deuxième période de temps prédéterminée des pâtes précuites ou des pâtes cuites pour obtenir des pâtes précuites ou des pâtes cuites à une température inférieure à 10°C.

L'étape de cuisson permet la gélatinisation de l'amidon et la réticulation des protéines. L'étape de cuisson permet de traiter les pâtes par hydrothermie à 100°C avec un excédent en eau. Une autre possibilité est d'effectuer l'étape de cuisson par vapeur d'eau. Au cours de la cuisson, le réseau maintien les granules d'amidon gélatinisées. L'avantage de gélatiniser les granules d'amidon est de rendre les pâtes digestes, pour cela la cuisson est faite par immersion dans de l'eau bouillante pendant une période de temps prédéterminée. Le temps optimal de cuisson est proportionnel au diamètre des pâtes crues et formées. Le temps de cuisson pour une même pâte sera différent en fonction du choix d'obtention, pâtes cuites ou pâtes précuites.

De préférence, selon la présente invention, le temps de cuisson des pâtes précuites est compris entre 1 et 10 minutes, de préférence entre 2 et 8 minutes, de préférence entre 3 et 6 minutes.

De préférence, selon la présente invention, le temps de cuisson des pâtes cuites est compris entre 1 et 20 minutes, de préférence entre 2 et 18 minutes, de préférence entre 3 et 16 minutes.

La pulvérisation de liquide froid présente quant à elle, lorsqu'elle est présente, l'avantage de diminuer la température de la pâte avant le passage dans le bac d'eau froide permettant ainsi d'éviter une élévation de la température dans le bac d'eau froide et d'éliminer une partie de l'amidon présente sur les pâtes.

De préférence, le procédé comprend en outre un égouttage des pâtes précuites ou des pâtes cuites pour obtenir des pâtes précuites ou des pâtes cuites égouttées.

De préférence, les pâtes précuites ou les pâtes cuites égouttées sont enrobées dans de l'huile durant une étape d'enrobage.

De préférence, le procédé comprend en outre une étape de pasteurisation des pâtes formées, de préférence des pâtes précuites ou des pâtes cuites égouttées, plus particulièrement des pâtes précuites ou des pâtes cuites conditionnées en portions prêtes à l'emploi.

Cela présente l'avantage de permettre la conservation des pâtes fraîches et des pâtes précuites dans des cartons dans un espace de stockage réfrigéré. Les commandes sont ensuite préparées et expédiées au client.

De préférence, les pâtes formées ont un temps de séjour dans le flux d'air alimenté par la soufflante compris entre 0,1 et 30 secondes, de préférence entre 0,5 et 15 secondes, de préférence entre 1 et 5 secondes.

Cela présente l'avantage de sécher les pâtes crues et formées, avant l'étape de cuisson et donc de permettre la cuisson individuellement de chaque pâte et non de cuire en bloc. La cuisson en bloc ne permettrait pas de cuire les pâtes de manière homogène et présente des problèmes de texture à la dégustation.

Préférentiellement, dans le procédé selon la présente invention, le flux d'air est un flux d'air à température ambiante, à savoir entre 15 et 25°C. Cela présente l'avantage de consommer moins d'énergie.

De préférence, selon la présente invention, le flux d'air est alimenté à co-courant ou à contrecourant par rapport à une direction de déplacement des pâtes formées.

Dans une variante avantageuse de la présente invention, le flux d'air est alimenté de manière non parallèle par rapport à une direction de déplacement desdites pâtes formées.

Plus particulièrement, selon la présente invention, le flux d'air est alimenté pendant le premier déplacement et/ou le deuxième déplacement et/ou encore entre les premiers et deuxième déplacement.

Cela présente l'avantage de sécher les pâtes formées à la sortie de l'étape de mise en forme pour les soumettre au flux d'air. Ce déplacement permet d'une part d'accueillir les pâtes formées, puisqu'elles rebondissent pour changer de direction entre le premier et le deuxième déplacement, et d'autre part de les sécher avant la cuisson afin de permettre une cuisson individuelle des pâtes.

D'autres formes de réalisation du procédé suivant l'invention sont indiquées dans les revendications annexées.

L'invention a aussi pour objet un dispositif pour la fabrication de pâtes à partir d'ingrédients constitutifs comprenant une zone de mise en forme d'un mélange pour obtenir des pâtes formées, une zone de conditionnement pour les pâtes formées pour obtenir des pâtes conditionnées en portions prêtes à l'emploi, le dispositif comprend en outre entre la zone de mise en forme et la zone de conditionnement, une zone de transfert des pâtes formées, la zone de transfert comprenant un premier tronçon et un deuxième tronçon présentant respectivement une première direction et une deuxième direction de déplacement de pâtes formées, la deuxième direction étant non parallèle à la première direction, le premier tronçon se trouvant en amont d'un moyen de butée tandis que le deuxième tronçon se trouve en aval du moyen de butée ; le moyen de butée étant agencé pour être mis en contact avec les pâtes formées déplacées dans le premier tronçon et les orienter (dévier) dans le deuxième tronçon, et des moyens d'alimentation d'un flux d'air muni d'une soufflante agencée pour souffler un flux d'air sur les pâtes formées se déplaçant dans le premier tronçon et/ou le deuxième tronçon et/ou entre les premier et deuxième tronçons.

Le dispositif est agencé de telle manière à utiliser le moins d'énergie possible. En effet, la soufflante entre la zone de mise en forme et la zone de conditionnement est alimentée par de l'air ambiant et ne comporte pas de moyens de chauffage. De plus, la soufflante est disposée de manière à souffler un flux d'air sur les pâtes formées se déplaçant dans le premier tronçon et/ou le deuxième tronçon et/ou entre les premier et deuxième tronçons, ce qui permet de fournir un débit suffisant pendant le déplacement des pâtes en aval de l'extrudeuse et d'ainsi sécher très brièvement les pâtes formées, mais de manière suffisante pour éviter la formation d'agglomérats et fournir des pâtes individualisées.

De préférence, le dispositif comprend en outre une zone de mélange pour les ingrédients constitutifs.

De préférence, le moyen de butée comprend une paroi inclinée perforée d'une série d'orifices traversants, les orifices traversants étant agencés pour être traversé par le flux d'air.

L'ensemble présente l'avantage de venir se positionner au-dessous de la zone de mise en forme pour réceptionner et sécher les pâtes formées.

Préférentiellement, l'ensemble est escamotable. Cela présente l'avantage de faciliter le nettoyage de la zone de mise en forme et le nettoyage de la paroi inclinée perforée.

De préférence, la soufflante est positionnée de manière à permettre au flux d'air de traverser la paroi inclinée perforée. La soufflante est positionnée de préférence en arrière de la paroi inclinée perforée afin de permettre le séchage des pâtes à travers la grille.

De préférence, le dispositif comprend en outre une zone de cuisson comprenant un premier bac d'eau chaude à une première température de cuisson pour obtenir des pâtes précuites ou des pâtes cuites, ainsi qu'un ou plusieurs équipements choisis parmi des moyens de transport des pâtes formées, en amont du premier bac de cuisson, les moyens de transport étant agencés pour amener les pâtes formées au premier bac de cuisson, des moyens d'aspersions de liquide froid à une température comprise entre 4°C et 20°C, en aval du premier bac de cuisson, disposés à proximité d'une bande de convoyage agencée pour exposer les pâtes précuites ou les pâtes cuites à l'air ambiant ainsi qu'au liquide froid, un deuxième bac d'eau froide, en aval du premier bac de cuisson, à une deuxième température inférieure à 10°C pour obtenir des pâtes précuites ou des pâtes cuites à une température inférieure à 10°C.

Par les termes « disposés à proximité » selon la présente invention, on entend des moyens d'aspersions disposés au-dessus d'une bande de convoyage ou sur le côté de telle manière que des gicleurs équipant les moyens d'aspersion dirigent le liquide froid sur les pâtes précuites et/ou cuites circulant sur la bande de convoyage.

Avantageusement, le deuxième bac d'eau froide est en aval du premier bac de cuisson, mais aussi en aval des moyens d'aspersions de liquide froid lorsqu'ils sont présents.

De préférence, les moyens de transport en amont du premier bac de cuisson sont formés par une bande transporteuse qui s'étend en aval de la zone de transfert jusqu'à la zone de conditionnement, ladite bande transporteuse traversant le premier bac de cuisson, éventuellement le deuxième bac de cuisson et les moyens d'aspersions en y formant ladite bande de convoyage.

De préférence, la bande de convoyage est continue. Elle s'étend donc du deuxième tronçon jusqu'en aval du premier ou du deuxième bac de cuisson. Ainsi, la bande de convoyage passe au travers des bacs de cuisson pour y plonger les pâtes qui reposent sur la bande de convoyage.

Dans une autre forme de réalisation de l'invention, au lieu d'une bande de convoyage continue, le dispositif selon la présente invention comprend une succession de bandes transporteuses dont certaines seront immergées et d'autres non. Par exemple, une première qui va de la zone de transfert au début du premier bac de cuisson, une deuxième immergée dans le premier bac de cuisson, une troisième après le premier bac de cuisson et qui traverse les moyens d'aspersions, une quatrième entre moyens d'aspersions et un deuxième bac, une cinquième immergée dans le deuxième bac, une sixième en aval du deuxième bac et en amont de la zone de conditionnement. Dans un tel cas, des moyens de transfert permettent de transférer les pâtes d'une bande de convoyage à une autre.

De préférence, la zone de conditionnement comprend en outre une zone d'égouttage pour obtenir des pâtes précuites ou des pâtes cuites égouttées, ladite zone d'égouttage comprend une paroi perforée d'orifices, ladite zone d'égouttage sépare une zone de rétention agencée pour retenir lesdites pâtes précuites ou lesdites pâtes cuites sur ladite paroi perforée d'orifices et une zone de collecte de liquide agencée pour collecter les liquides après cuisson, une zone d'emballage agencée pour obtenir des pâtes précuites ou des pâtes conditionnées en portions prêtes à l'emploi, la zone d'emballage est dans une zone sous atmosphère protectrice, la zone d'emballage est reliée à une zone de contrôle des pâtes précuites ou des pâtes cuites conditionnées en portions prêtes à l'emploi comprenant des moyens de vérification tels qu'une balance, un détecteur de métal et/ou un oxymètre.

De préférence, en amont de la zone de conditionnement se trouve une zone d'enrobage reliée en aval de ladite zone de rétention comprenant une vis sans fin ou un pulvérisateur agencé pour obtenir des pâtes précuites ou des pâtes cuites égouttées et enrobées uniformément et une zone de pasteurisation reliée en aval de ladite zone de contrôle des pâtes précuites ou des pâtes cuites conditionnées en portions prêtes à l'emploi pour conserver les pâtes précuites ou pâtes cuites conditionnées.

D'autres formes de réalisation du dispositif selon la présente invention sont mentionnées dans les revendications annexées.

La présente invention se rapporte par ailleurs à un produit à base de pâtes fraîches, précuites ou cuites comprenant moins de 10% d'agglomérats de deux ou plus de deux pâtes, de préférence moins de 5% d'agglomérats de deux ou plus de deux pâtes, de préférence moins de 2% d'agglomérats de deux ou plus de deux pâtes, les % sont des % en poids (poids des agglomérats par rapport au poids des pâtes ramenés à 100%).

Préférentiellement, le produit est conditionné en portion prête à l'emploi.

D'autres formes de réalisation du produit à base de pâtes fraiches suivant l'invention sont indiquées dans les revendications annexées.

D'autres caractéristiques, détails et avantages de l'invention ressortiront de la description donnée ci-après, à titre non limitatif et en faisant référence aux dessins et aux exemples.
La figure 1 est une vue de profil du dispositif pour la fabrication de pâtes.
La figure 2 est une vue de profil d'un autre mode de réalisation du dispositif pour la fabrication de pâtes.
Les figures 3a, 3b et 3c sont des vues de profil de la zone de transfert des pâtes formées.
La figure 4 est une vue de face de la grille dudit dispositif pour la fabrication de pâtes.

Sur les figures, les éléments identiques ou analogues portent les mêmes références.

La liste des références utilisées est décrite ci-dessous :
1 - une étape de structuration
2 - bande de convoyage
3 - mise en forme
4 - une étape de cuisson
4a - un passage dans un bac d'eau chaude
4b - collecte et pulvérisation de liquide froid
4c - un passage dans un bac d'eau froide
6 - soufflante
7 - paroi inclinée perforée
8 - semoule
9 - eau
10- oeuf
11 - zone de conditionnement
12 - sortie de l'extrudeuse
13 - dôme de fixation central
14 - moyens de fixation coulissants
15 - bouche du système de séparation
16 - moyens de couplage du moteur à la turbine de la soufflante
17 - moteur de la soufflante
18 - enrobage
19 - tringle - barre de suspension
20 - moyen de fixation de la barre de suspension au châssis
21 - châssis
22 - zone de transfert
22a - premier tronçon
22b - deuxième tronçon
23 parois latérales du système de séparation
24 - moyens d'aspersion
25 - paroi supérieure du système de séparation
26 - paroi dorsale du système de séparation
28 - cavité de rétention
29 - zone de collecte de liquide
30 - zone d'égouttage
31 - moyen de transport

Comme mentionné précédemment, la présente invention concerne le domaine des dispositifs pour la fabrication de pâtes alimentaires et le procédé qui y est mis en oeuvre, permettant une bonne rentabilité industrielle tout en conservant les propriétés organoleptiques, physiques, gustatives et/ou nutritives des pâtes fraîches, précuites ou cuites.

La fabrication de pâtes fraiches est décrite ci-après, de la production primaire à la consommation humaine.

La fabrication commence par une étape de structuration consistant à amener des ingrédients constitutifs de pâtes, des silos de stockage 8, 9 et 10 au mélangeur 1. Les ingrédients constitutifs sont par exemple de la semoule et de l'eau, chaque ingrédient est stocké dans un silo individuel. D'autres constituants peuvent être ajoutés tels que des oeufs pasteurisés, de la tomate, des épinards ou d'autres arômes.... Par exemple, pour la fabrication de pâtes aux épinards, les épinards sous forme de poudre seront dissouts dans l'eau avant d'être incorporés dans le mélange. L'eau, la semoule et les oeufs pasteurisés sont ensuite dosés et mélangés dans le mélangeur 1 pour former une pâte granuleuse. Ensuite, la pâte dans le mélangeur 1 est pétrie, puis chauffée et mise sous pression pour être extrudée dans une extrudeuse 3.

Au cours de l'extrusion, la pâte est lisse et homogène. Il est possible d'ajuster le dosage des ingrédients pour obtenir une consistance de pâte souhaitée. Cette étape de mise en forme est réalisée à une température inférieure ou égale à 40°C sous une pression de 100 bars. Dans une autre forme de réalisation, l'étape de mise en forme se fait par laminage.

Les pâtes crues et formées à la sortie de l'extrudeuse peuvent être de différentes formes, comme par exemple, sous forme de pâtes courtes, pâtes longues et/ou pâtes en feuilles. Les pâtes sont formées par des couteaux rotatifs qui sont positionnés à la sortie de la filière d'extrusion 12. Les pâtes obtenues sont filtrées à 2mm avant d'être calibrées. Une étape de vérification peut être réalisée à la fin de l'étape de mise en forme. Les pâtes crues et formées sont introduites dans le système de séparation où elles sont ensuite rapidement séchées. Au cours de cette étape de séchage bref, les pâtes crues et formées subissent un premier déplacement selon une première direction, puis les pâtes crues et formées butent sur un moyen de butée 7, comme par exemple une grille perforée inclinée 7 qui leur confère une déviation pour qu'elles soient alors soumises au deuxième déplacement non parallèle au premier déplacement. Le premier déplacement 22a des pâtes crues et formées est effectué le long d'un premier tronçon 22a, tandis que le deuxième déplacement 22b des pâtes crues et formées est effectué le long d'un deuxième tronçon 22b. Le premier et le deuxième tronçons 22a et 22b sont séparés l'un de l'autre par les moyens de butées 7 du système de séparation.

Durant le déplacement, les pâtes crues et formées sont soumises à un flux d'air alimenté par une soufflante 6. Cette étape de séchage est effectuée à température ambiante. Le flux d'air alimenté par la soufflante pendant une période de temps comprise entre 0,1 et 30 secondes, de préférence entre 0,5 et 15 secondes, de préférence entre 1 et 5 secondes.

Le flux d'air est de préférence, sans toutefois y être limité, alimenté au travers de la grille perforée inclinée 7 à contre-courant par rapport au déplacement des pâtes crues et formées. Le flux d'air permet d'amortir la butée des pâtes permettant de les séparer dans les écraser ou les déformées. A la fin du deuxième déplacement 22b, les pâtes atterrissent sur un moyen de transport comme une bande de convoyage 2 où elles seront acheminées jusqu'à une dernière étape de conditionnement 11 consistant à obtenir des pâtes fraiches conditionnées en portions prêtes à l'emploi.

Cette étape de conditionnement peut être suivie par exemple d'une pasteurisation des pâtes crues et formées, et peut comprendre un emballage sous atmosphère inerte, des tests de qualité du produit tels que la détection de métal, le tri pondéral et l'oxymétrie, la mise en bac/chariot et/ou la mise en cartons pour être transportées et expédiées jusqu'au consommateur.

La fabrication de pâtes précuites ou cuites est décrite ci-après, de la production primaire à la consommation humaine.

La fabrication commence par une étape de structuration consistant à amener des ingrédients constitutifs de pâtes, des silos de stockage 8, 9 et 10 au mélangeur 1. Les ingrédients constitutifs sont par exemple de la semoule et de l'eau, chaque ingrédient est stocké dans un silo individuel. D'autres constituants peuvent être ajoutés tels que des oeufs pasteurisés, de la tomate, des épinards ou d'autres arômes.... Par exemple, pour la fabrication de pâtes aux épinards, les épinards sous forme de poudre seront dissouts dans l'eau avant d'être incorporés dans le mélange. L'eau, la semoule et les oeufs pasteurisés sont ensuite dosés et mélangés dans le mélangeur 1 pour former une pâte granuleuse. Ensuite, la pâte dans le mélangeur 1 est pétrie, puis chauffée et mise sous pression pour être extrudée dans une extrudeuse 3.

Au cours de l'extrusion, la pâte est lisse et homogène. Il est possible d'ajuster le dosage des ingrédients pour obtenir une consistance de pâte souhaitée. Cette étape de mise en forme est réalisée à une température inférieure ou égale à 40°C sous une pression de 100 bars. Dans une autre forme de réalisation, l'étape de mise en forme se fait par laminage.

Les pâtes crues et formées à la sortie de l'extrudeuse peuvent être de différentes formes, comme par exemple, sous forme de pâtes courtes, pâtes longues et/ou pâtes en feuilles. Les pâtes sont formées par des couteaux rotatifs qui sont positionnés à la sortie de la filière d'extrusion 12. Les pâtes obtenues sont filtrées à 2mm avant d'être calibrées. Une étape de vérification peut être réalisée à la fin de l'étape de mise en forme. Les pâtes crues et formées sont introduites dans le système de séparation où elles sont ensuite rapidement séchées. Au cours de cette étape de séchage bref, les pâtes crues et formées subissent un premier déplacement selon une première direction, puis les pâtes crues et formées butent sur un moyen de butée 7, comme par exemple une grille perforée inclinée 7 qui leur confère une déviation pour qu'elles soient alors soumises au deuxième déplacement non parallèle au premier déplacement. Le premier déplacement 22a des pâtes crues et formées est effectué le long d'un premier tronçon 22a, tandis que le deuxième déplacement 22b des pâtes crues et formées est effectué le long d'un deuxième tronçon 22b. Le premier et le deuxième tronçons 22a et 22b sont séparés l'un de l'autre par les moyens de butées 7 du système de séparation.

Durant le déplacement, les pâtes crues et formées sont soumises à un flux d'air alimenté par une soufflante 6. Cette étape de séchage est effectuée à température ambiante. Le flux d'air alimenté par la soufflante pendant une période de temps comprise entre 0,1 et 30 secondes, de préférence entre 0,5 et 15 secondes, de préférence entre 1 et 5 secondes

Le flux d'air est de préférence, sans toutefois y être limité, alimenté au travers de la grille perforée inclinée 7 à contre-courant par rapport au déplacement des pâtes crues et formées. Le flux d'air permet d'amortir la butée des pâtes permettant de les séparer dans les écraser ou les déformées. A la fin du deuxième déplacement 22b, les pâtes atterrissent sur un moyen de transport comme une bande de convoyage 2 où elles seront acheminées jusqu'à une dernière étape de conditionnement 11 consistant à obtenir des pâtes fraiches conditionnées en portions prêtes à l'emploi.

Cette étape de conditionnement peut être suivie par exemple d'une pasteurisation des pâtes crues et formées, et peut comprendre un emballage sous atmosphère inerte, des tests de qualité du produit tels que la détection de métal, le tri pondéral et l'oxymétrie, la mise en bac/chariot et/ou la mise en cartons pour être transportées et expédiées jusqu'au consommateur.

Avant l'étape de conditionnement, les pâtes crues et formées passent par une étape de cuisson. Les pâtes crues et formées sont donc cuites pour obtenir des pâtes au moins partiellement cuites ou cuites. Les pâtes crues et formées passent sur la bande de convoyage dans un bac d'eau chaude 4a à une première température de cuisson pendant une première période de temps prédéterminée. La cuisson pour l'obtention de pâtes précuites se fait à une température d'environ 93°C entre 1 et 10 minutes, de préférence entre 2 et 8 minutes, de préférence entre 3 et 6 minutes. La cuisson pour l'obtention de pâtes cuites se fait à une température d'environ 93°C entre 1 et 20 minutes, de préférence entre 2 et 18 minutes, de préférence entre 3 et 16 minutes. La cuisson peut être faite en plongeant les pâtes crues et formées dans un bac d'eau en ébullition ou par vapeur d'eau. De préférence, l'eau est salée. Les pâtes circulant sur la bande de convoyage sont ensuite collectées pour passer à l'air libre et être pulvérisées par du liquide froid dans une zone de pulvérisation de liquide froid 4b à une température comprise entre 4°C et 20°C. Une fois les pâtes légèrement refroidies à l'air libre, elles sont amenées sur la bande de convoyage 2 dans un bac d'eau froide 4c à une deuxième température pendant une deuxième période de temps prédéterminée. En sortie du bac d'eau froide, les pâtes précuites ou les pâtes cuites sont à une température inférieure à 10°C.

L'étape suivante est une étape d'égouttage dans une zone d'égouttage 30. Les pâtes circulant sur la bande de convoyage 2 pendant l'étape de cuisson sont déversées et collectées dans des passoires. Les passoires étant positionnées sur une chaîne à godets. Chaque passoire est remplie de pâte à la sortie de l'étape de cuisson, puis les passoires montent grâce au mouvement de la chaîne à godet. La chaîne à godet peut accueillir entre 10 et 15 passoires (acvité de rétention 28). Une fois en haut, les pâtes précuites ou les pâtes cuites sont déversées sur un moyen de transport 31 différent de la bande de convoyage 2 de l'étape de cuisson. L'eau de cuisson est récupérée indépendamment des pâtes pour être jetée ou recyclée dans la zone de collecte d'eau de cuisson 29. Les pâtes précuites ou les pâtes cuites sont enrobées dans la zone d'enrobage 18 c'est-à-dire qu'elles sont recouvertes d'une couche protectrice, de manière à assurer leur conservation et/ou à empêcher une réhydratation non voulue. La couche protectrice est de préférence un corps gras, avantageusement une huile alimentaire, de préférence l'huile de tournesol. Les pâtes sont ensuite conditionnées sous atmosphère inerte, puis pasteurisées une fois qu'elles sont emballées. Pour cela, les emballages sont soumis à de la vapeur humide à 93°C et à de l'air chaud à 105°C consécutivement. D'autres traitements par la chaleur peuvent être utilisés tel que la stérilisation, le traitement à ultra haute température ou l'appertisation. Des tests de qualité du produit sont effectués, tels que la détection de métal, le tri pondéral et l'oxymétrie. Les pâtes précuites ou des pâtes cuites conditionnées en portions prêtes à l'emploi sont ensuite mises en bac/chariot, puis ces bacs/chariots sont mis dans des cartons pour être transportées et expédiées jusqu'au consommateur. Le stockage est de préférence réfrigéré.

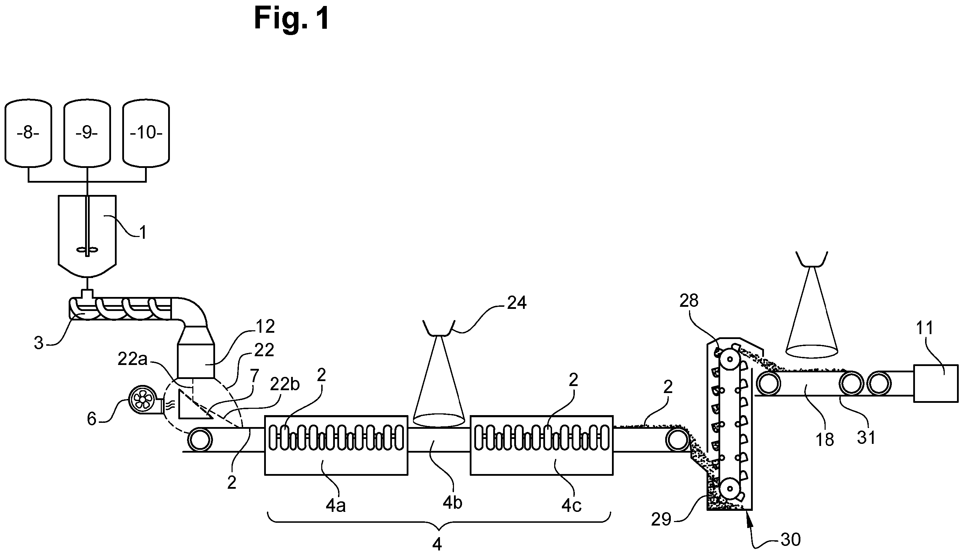

La figure 1 illustre le dispositif pour la fabrication de pâtes précuites selon la présente invention. Comme on peut le voir, le dispositif selon l'invention comprend des moyens d'alimentations d'ingrédients constitutifs, notamment un moyen d'alimentation de farine de blé 8, appelé communément « semoule » 8, un moyen d'alimentation d'oeuf 10 et un moyen d'alimentation d'eau 9. La farine de blé 8 peut être biologique, pour cela un autre moyen d'alimentation sera installé pour garantir la traçabilité de la filière biologique. Chaque ingrédient est dosé et amené dans un mélangeur 1a. Il est possible de rajouter d'autres ingrédients tels que de la tomate, des épinards, du charbon, etc... Les ingrédients en poudre seront de préférence dissouts dans un liquide avant d'être incorporé au mélange. Le mélangeur 1a est alors mis en marche pour mélanger les ingrédients constitutifs, pendant le mélange la pâte obtenue est sous forme granuleuse. La pâte sous forme granuleuse est ensuite pétrie dans un pétrisseur 1b pour obtenir une pâte lisse et homogène. De préférence, le mélangeur 1a et le pétrisseur 1b sont dans une zone de mélange 1.

Le dispositif selon la présente invention comporte en outre une amenée/alimentation entre la zone de mélange 1 et une zone de mise en forme 3 permettant d'amener la pâte granuleuse pétrie à la zone de mise en forme 3. La zone de mise en forme 3 comprend une extrudeuse permettant d'obtenir tous types de pâtes formées, longues, courtes ou en feuilles. L'extrudeuse comprend une sortie d'extrudeuse 12 munie sur son extrémité d'une filière d'extrusion associé à des couteaux rotatifs. La vitesse de rotation des couteaux détermine la taille des pâtes. La filière de l'extrudeuse est de préférence orientée vers le bas. La pâte dans l'extrudeuse est chauffée à une température inférieure ou égale à 40°C, de préférence inférieure ou égale à 38°C, de préférence inférieure ou égale à 36°C. La pâte dans l'extrudeuse est homogène et lisse. La pâte dans l'extrudeuse est soumise à une pression comprise entre 80 et 120 bars, de préférence entre 90 et 110 bars, de préférence entre 98 et 102 bars.

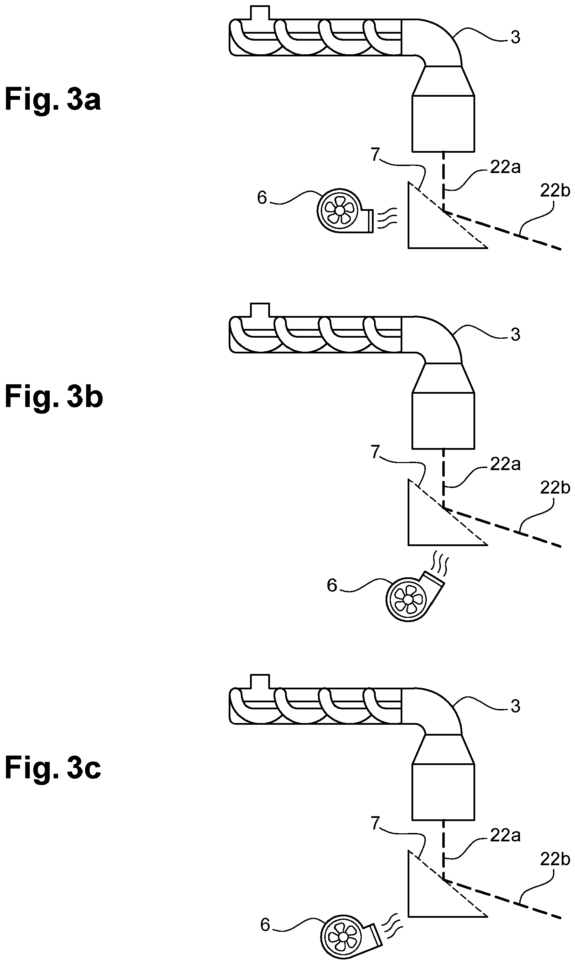

Dans la forme de réalisation illustrée dans la figure 1, et comme montré plus en détails à la figure 3, le dispositif comprend en outre une zone de transfert 22 des pâtes formées, positionnée en aval de l'extrudeuse dans laquelle les pâtes en sortie d'extrudeuse sont déplacées. Cette zone de transfert 22 comprend un premier tronçon 22a présentant une première direction de déplacement de pâtes formées et un deuxième tronçon 22b présentant une deuxième direction de déplacement de pâtes formées. Le premier tronçon 22a et le deuxième tronçon 22b sont séparés par un moyen de butée 7, de préférence par une paroi inclinée perforée 7, d'un système de séparation. La distance du premier tronçon, entre la filière de l'extrudeuse et la paroi inclinée est comprise entre 10 et 60 cm, de préférence entre 20 et 50 cm, de préférence entre 25 et 45 cm. La distance du deuxième tronçon, entre la paroi inclinée et la bande de convoyage est comprise entre 20 et 45 cm, de préférence entre 25 et 40 cm, de préférence entre 30 et 36 cm.

La paroi inclinée perforée 7 du système de séparation sert de paroi de rebond pour les pâtes c'est-à-dire que le changement de direction de la pâte formée est effectué au niveau de la paroi inclinée perforée 7, en conséquence du rebond sur la paroi inclinée perforée 7. Le dispositif comprend des moyens d'alimentation d'un flux d'air muni d'une soufflante 6 agencée pour souffler un flux d'air sur les pâtes formées à travers la paroi inclinée perforée 7 munie d'orifices traversants. L'alimentation du flux d'air sera décrite plus précisément en faisant référence aux figures 3 ci-dessous.

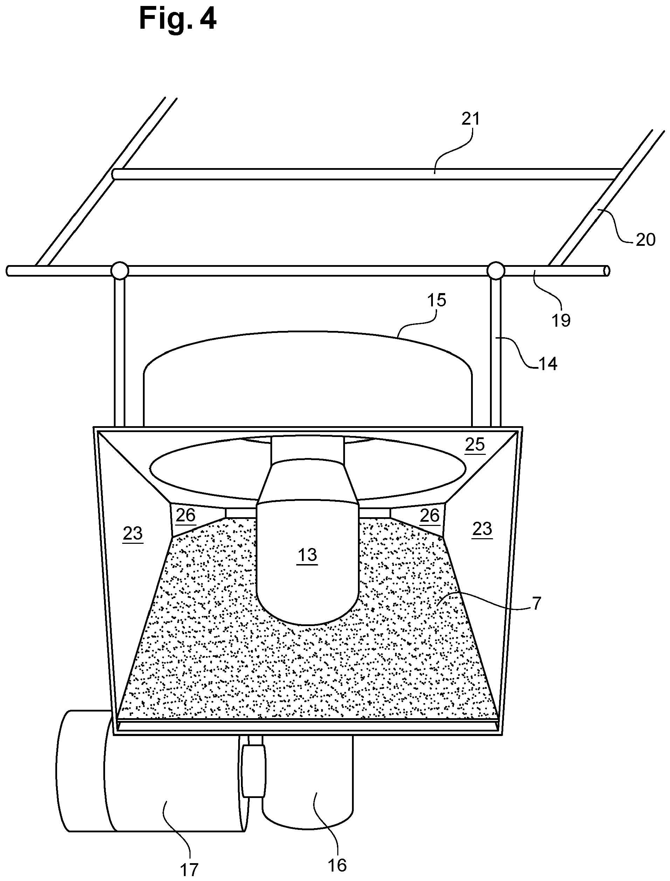

Comme on peut le voir à la figure 4, le système de séparation comprend la paroi inclinée perforée 7 qui est positionnée de préférence dans un logement rectangulaire, carré, ovale ou rond venant se positionner sous la filière de l'extrudeuse. Le logement est de préférence escamotable. Le logement comporte des parois verticales 23 servant de déflecteur aux pâtes qui rebondiraient lors de la butée sur la paroi inclinée perforée 7. Le logement comprend une ouverture qui permet la sortie des pâtes déviées dans le deuxième tronçon, mais permet aussi l'inspection ainsi que la sortie du flux d'air lorsque celui-ci est soufflé au travers de la paroi perforée. Le logement comporte également une paroi supérieure 25. La paroi supérieure comporte une tubulure d'alimentation 15 des pâtes en sortie d'extrudeuse et de la filière qui collecte les pâtes coupées par les couteux rotatifs. La paroi supérieure comporte également un orifice traversant en communication avec la tubulure d'alimentation 15. La paroi interne de la tubulure d'alimentation 15 comporte des rayons traversants qui sont reliés à un dôme de fixation central 13. Le dôme de fixation central 13 comporte des moyens de fixation centraux qui permettent d'une part de fixer le dôme 13 au logement, mais aussi la grille perforée inclinée 7. Le logement comprend par ailleurs une paroi dorsale 26, qui comprend une bouche, reliée à la sortie d'air de la soufflante 6. Le logement est par ailleurs supporté par une tringle 19 à l'aide de moyens de fixation 14 ou moyens de suspension, qui permettent de suspendre le logement et la grille à un châssis 21 auquel la tringle (moyen de suspension) 19 est reliée par des moyens de fixation 20 de la barre de suspension 19 au châssis 21.

La tubulure d'alimentation 15 est alors en communication avec la sortie de l'extrudeuse ou la filière 12. Elles sont placées l'une en face de l'autre afin de collecter dans la tubulure d'alimentation 12 du système de séparation les pâtes coupées par les couteaux rotatifs. Lorsque le dispositif doit être nettoyé ou inspecté, le système de séparation est alors escamoté, comme par exemple coulissé latéralement, de manière à faciliter l'accès à la sortie de l'extrudeuse, ou bien pour nettoyer le dispositif de séparation. En effet, les moyens de fixation/suspension 14 du système de séparation sont montés coulissant le long de la tringle ou moyen de suspension 19.

La soufflante 6 dont la bouche est reliée à la paroi dorsale 26 permet de souffler de l'air ambiant au travers de la grille perforée inclinée 7. La soufflante est actionnée grâce à un moteur 17 relié à des moyens de couplage 16 qui permettent d'actionner la turbine de la soufflante 6 (non illustrée). Le moteur 17, ainsi que la soufflante sont montés également sur le châssis 21.

La grille perforée inclinée 7 présente une paroi inclinée d'un angle compris entre 30 et 60°, de préférence 35 et 55°, de préférence entre 42 et 48° par rapport à un plan horizontal. Les orifices traversants sont répartis équitablement sur toute la paroi 7 de la grille pour permettre au flux d'air de traverser la grille 7. La grille est maintenue dans le dispositif par le dôme de fixation 13. La grille 7 est en forme de polygone, de préférence en forme d'hexagone. La profondeur de la grille est comprise entre 20 et 45cm, de préférence entre 25 et 40cm, de préférence entre 30 et 34cm. La largeur de la grille est comprise entre 20 et 45cm, de préférence entre 25 et 40cm, de préférence entre 30 et 34cm.

Lelogement du système de séparation présente plus particulièrement une hauteur comprise entre 20 et 30 cm, une longueur comprise entre 25 et 40 cm et une largeur comprise entre 25 et 40 cm. De préférence, ce logement est en acier, de préférence en acier inoxydable. Dans la forme de réalisation préférentielle illustrée, la soufflante permet de souffler le flux d'air 6 à travers la paroi inclinée perforée 7. La paroi perforée est de préférence inclinée d'un angle compris entre 30 et 60°, de préférence 35 et 55°, de préférence entre 42 et 48°. Les orifices traversants sont répartis équitablement sur toute la paroi 7 pour permettre au flux d'air de traverser toute la paroi inclinée perforée 7.

Lorsque les pâtes quittent l'extrudeuse 3, elles effectuent un premier déplacement 22a et butent sur la grille perforée inclinée 7. La grille perforée inclinée 7 dévie donc les pâtes pour leur conférer une déviation afin qu'elles effectuent le deuxième déplacement, non parallèle au premier déplacement. La pâte en sortie d'extrudeuse est souvent assez collante et l'effet d'agglomération des pâtes en sortie d'extrudeuse est encore accru avec la rotation des couteaux rotatifs. La présence du dôme de fixation 13 de la grille 7 sous la tubulure d'alimentation 15 et au niveau du centre de la tubulure d'alimentation 15 favorise la séparation des pâtes qui quittent la filière d'extrusion dans la zone centrale de celle-ci. Si les pâtes sont éjectées latéralement, les parois latérales 23 permettent de les ramener en butée sur la grille perforée inclinée 7 et de les dévier pour leur imposer le deuxième déplacement.

Revenant à la figure 1, le dispositif selon la présente invention comprend en outre une zone de cuisson 4, en aval de la zone de transfert 22. En fonctionnement, lorsque les pâtes formées ont traversé le premier tronçon 22a et le deuxième tronçon 22b (voir figures 3a, b et c), elles atterrissent sur une bande de convoyage 2 qui traverse toute la zone de cuisson 4. La bande de convoyage 2 est de préférence continue. La zone de cuisson 4 comprend un premier bac d'eau chaude 4a à une première température de cuisson pour obtenir des pâtes précuites ou des pâtes cuites. Le bac d'eau chaude 4a est à une température comprise entre 84 et 100°C, de préférence entre 86 et 98°C, de préférence entre 90 et 94°C. La zone de cuisson 4 comprend des moyens d'aspersions 24 de liquide froid dans la zone de pulvérisation de liquide froid 4b à une température comprise entre 4°C et 20°C, en aval du premier bac de cuisson 4a. En fonctionnement, les pâtes circulant sur la bande de convoyage 2 sont amenées sur une zone à air ambiant où elles sont aspergées de liquide froid par les moyens d'aspersions 24 dans la zone de pulvérisation 4b. La zone de cuisson 4 comprend un deuxième bac d'eau froide 4c, en aval du premier bac de cuisson 4a et de la zone de pulvérisation de liquide froid 4b, à une deuxième température inférieure à 10°C pour obtenir des pâtes précuites ou des pâtes cuites à une température inférieure à 10°C. De préférence, le temps de refroidissement dans le bac d'eau froide 4c est deux fois plus long que le temps de cuisson et donc, lorsqu'un convoyeur unique est présent, la longueur du bac de refroidissement est deux fois plus longue.

Le dispositif tel qu'illustré sur la figure 1 comprend une zone de conditionnement 11, en aval de la zone de cuisson 4, pour les pâtes formées pour obtenir des pâtes conditionnées en portions prêtes à l'emploi. La zone de conditionnement 11, en aval de la zone d'égouttage 30, comprend une zone d'emballage et une zone de contrôle.

La zone d'égouttage 30 comprend une chaîne à godet où sont positionnées des passoires agencées pour recevoir les pâtes à la sortie de la zone de cuisson 4. Les passoires comprennent entre 200 et 800g de pâtes par passoire, de préférence entre 250 et 750g de pâtes par passoire, de manière plus préférentielle entre 300 et 700g de pâtes par passoire. Les passoires sont formées de récipients munis d'au moins une paroi perforée d'orifices formant ainsi une cavité de rétention 28agencée pour retenir les pâtes précuites ou les pâtes cuites alors que l'eau dans laquelle les pâtes étaient immergées est rejetée au travers de la paroi perforée. L'eau rejetée est collectée dans une zone de collecte de liquide 29 agencée pour collecter les liquides d'immersion, de préférence l'eau de refroidissement ou de rinçage. L'eau de refroidissement ou de rinçage comprend de l'amidon peut être recyclé. Une fois égouttées, les pâtes sont amenées sur un tapis de convoyage 31 dans la zone de conditionnement 11, en aval de la zone d'égouttage 30. Dans la forme de réalisation, les pâtes égouttées sont enrobées d'huile, dans la zone d'enrobage 18, éventuellement contenant un microorganisme favorisant la conservation. Le produit alimentaire frais est conditionné de préférence dans un emballage sous une atmosphère inerte.

Par le terme « atmosphère inerte », on entend selon l'invention une atmosphère ayant la propriété de ne pas pouvoir réagir sur un produit. Préférentiellement, l'atmosphère inerte contient moins de 1% d'oxygène en volume. Alternativement, en fonction de produits frais, l'emballage hermétique peut être réalisé sous vide. De préférence, l'emballage est une barquette thermoformée. La barquette thermoformée peut contenir entre 200 et 4 000g de pâtes, de préférence entre 300 et 3 500g, de préférence entre 400 et 3 000g.

Dans la zone de conditionnement, La zone de contrôle 27, en aval de la zone d'emballage 26 comprend une balance pour contrôler le poids, un détecteur de métal et un oxymètre. Des tests de qualité du produit sont donc effectués dans la zone de contrôle 27, tels que la détection de métal, le tri pondéral et l'oxymétrie. Une fois les tests effectués, les pâtes précuites ou cuites conditionnées en portions prêtes à l'emploi sont mises en bac/chariot, puis sont mises en cartons pour être transportées et expédiées jusqu'au consommateur.

Dans un mode de réalisation avantageux, le procédé comprend, en amont de la zone de conditionnement 11, une zone d'enrobage 18 et une zone de pasteurisation, en aval de la zone d'enrobage 18et de la zone d'emballage.

De préférence, dans la zone d'enrobage, les pâtes précuites ou les pâtes cuites sont recouvertes d'une couche protectrice, de manière à assurer leur conservation et/ou à empêcher une réhydratation non voulue. La couche protectrice est de préférence un corps gras, avantageusement une huile alimentaire, de préférence l'huile de tournesol. La zone d'enrobage 18 comprend un tapis de convoyage 31, de préférence vibrant où les pâtes précuites ou cuites sont soumises à la vaporisation d'huile alimentaire. La pasteurisation est réalisée après conditionnement des pâtes et est effectuée par amenée de vapeur humide à 93°C et d'air chaud à 105°C consécutivement.

D'autres dispositifs pour le traitement par la chaleur peuvent être utilisés tel que des dispositifs pour la stérilisation, le traitement à ultra haute température ou l'appertisation.

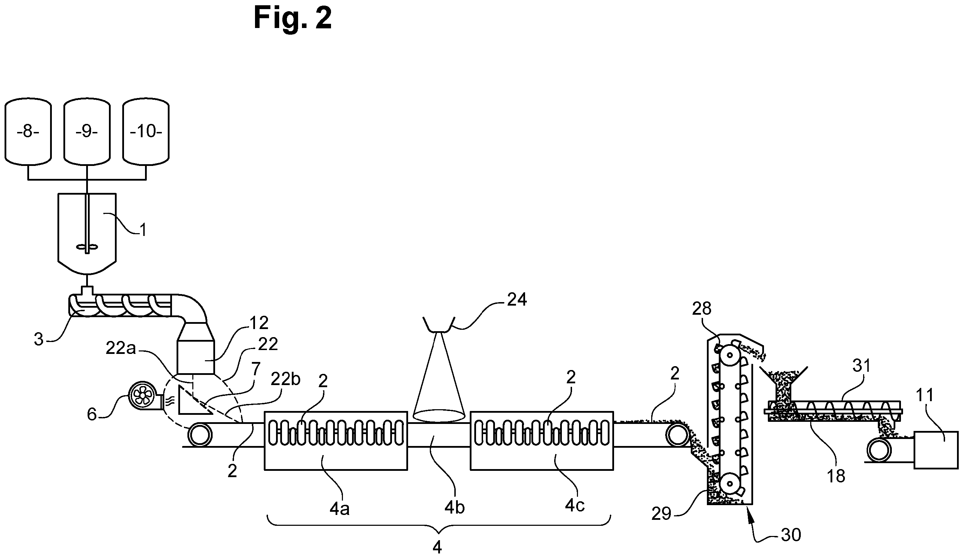

Dans une variante illustrée à la figure 2, la zone d'enrobage 18 entre la zone d'égouttage 30 et la zone de conditionnement 11 comprenant une vis sans fin qui est agencée pour obtenir des pâtes précuites ou des pâtes cuites égouttées et enrobées uniformément.

Comme illustré sur les figures 3a, 3b et 3c, les moyens d'alimentation du flux d'air muni d'une soufflante 6 peuvent être positionnés différemment pour souffler au travers de la paroi inclinée perforée 7. Le flux d'air est à température ambiante. Le dispositif ne comprend de préférence pas de source de chaleur supplémentaire pour chauffer le flux d'air.

Comme on peut le voir en détail à la figure 3a, l'alimentation du flux d'air, la soufflante 6 est positionnée de telle manière que l'air est principalement soufflé sur le premier tronçon 22a de la zone de transfert 22 présentant la première direction des pâtes formées. L'air soufflé sur le premier tronçon 22a est à contre-courant du premier déplacement effectué par les pâtes, amortissant légèrement la butée des pâtes en sortie d'extrudeuse sur la grille perforée inclinée 7. L'injection d'air au travers des orifices de la grille perforée inclinée permet de légèrement amortir les pâtes en sortie d'extrudeuse de manière à permettre leur séparation, sans modifier la forme des pâtes juste extrudées

Sur la figure 3b, l'alimentation du flux d'air, la soufflante 6, est positionnée de telle manière que l'air est principalement soufflé sur le deuxième tronçon 22b de la zone de transfert 22 présentant la deuxième direction des pâtes formées. L'air soufflé sur le deuxième tronçon 22b est plutôt quantà lui - co-courrant du deuxième déplacement effectué par les pâtes après rebond sur la grille perforée inclinée 7.

Sur la figure 3c, l'alimentation du flux d'air est positionnée de telle manière que l'air est soufflé principalement entre le premier tronçon 22a et le deuxième tronçon 22b de la zone de transfert 22 à l'endroit où a lieu le changement de direction par la butée des pâtes formées sur la grille perforée inclinée 7. L'injection d'air au travers des orifices de la grille perforée inclinée permet de légèrement amortir les pâtes en sortie d'extrudeuse de manière à permettre leur séparation, sans modifier la forme des pâtes juste extrudées. Ainsi, la butée des pâtes sur la grille perforée inclinée dévie les pâtes en sortie d'extrudeuse en provoquant un changement de direction des pâtes formées, de la première direction à la deuxième direction.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé pour la fabrication de pâtes à partir d'ingrédients constitutifs comprenant les étapes de :
- amenée d'un mélange (1) contenant lesdits ingrédients constitutifs,
- mise en forme (3) dudit mélange pour obtenir des pâtes formées,
- conditionnement (11) des pâtes formées pour obtenir des pâtes conditionnées en portions prêtes à l'emploi,
**caractérisé en ce que** ledit procédé comprend entre l'étape de mise en forme (3) et l'étape de conditionnement (11), un déplacement (22) des pâtes formées d'une zone de mise en forme (3) vers une zone de conditionnement (11), ledit déplacement comprenant un premier déplacement (22a) selon une première direction et un deuxième déplacement (22b) selon une deuxième direction non parallèle à ladite première direction, durant lequel déplacement (22), les pâtes formées sont soumises à un flux d'air alimenté par une soufflante(6), ledit premier déplacement (22a) et ledit deuxième déplacement (22b) se produisant respectivement en amont et en aval d'une butée (7) projetant et déviant les pâtes formées pour leur conférer ledit deuxième déplacement (22b).

2. Procédé pour la fabrication de pâtes selon la revendication 1 comprenant en outre, entre l'étape de mise en forme (3), après ledit déplacement (22), et en amont de l'étape de conditionnement (11), une étape de cuisson (4) au moins partielle desdites pâtes formées pour obtenir des pâtes formées, précuites ou cuites.

3. Procédé selon la revendication 1 ou la revendication 2, dans lequel l'étape d'amenée du mélange est précédée d'une étape de structuration comprenant en outre :
- un dosage et une amenée des ingrédients constitutifs,
- un mélange (1) des ingrédients constitutifs pour l'obtention d'une pâte granuleuse, et
- un pétrissage dudit mélange pour l'obtention d'une pâte homogène et lisse.

4. Procédé selon l'une quelconque des revendications 1 à 3, dans lequel ladite étape de cuisson (4) au moins partielle des pâtes formées pour obtenir des pâtes précuites ou des pâtes cuites formées pour obtenir des pâtes précuites ou des pâtes cuites comprend une ou plusieurs étapes parmi
(i) un passage dans un bac d'eau chaude (4a) à une première température de cuisson pendant une première période de temps prédéterminée pour obtenir lesdites pâtes précuites ou lesdites pâtes cuites,
(ii) une collecte desdites pâtes précuites ou desdites pâtes cuites et un passage à l'air libre des pâtes précuites ou des pâtes cuites avec pulvérisation de liquide froid (4b) à une température comprise entre 4°C et 20°C,
(iii) un passage dans un bac d'eau froide (4c) à une deuxième température pendant une deuxième période de temps prédéterminée des pâtes précuites ou des pâtes cuites pour obtenir des pâtes précuites ou des pâtes cuites à une température inférieure à 10°C.

5. Procédé selon l'une des revendications 1 à 4, comprenant en outre un égouttage (30) desdites pâtes précuites ou des pâtes cuites pour obtenir des pâtes précuites ou des pâtes cuites égouttées après lequel les pâtes précuites ou les pâtes cuites égouttées sont de préférence enrobées dans de l'huile durant une étape d'enrobage (18).

6. Procédé selon l'une quelconque des revendications 1 à 5, comprenant en outre une étape de pasteurisation des pâtes formées, de préférence des pâtes précuites ou des pâtes cuites égouttées, plus particulièrement des pâtes précuites ou des pâtes cuites conditionnées en portions prêtes à l'emploi.

7. Procédé selon l'une quelconque des revendications précédentes, dans lequel les pâtes formées ont un temps de séjour dans ledit flux d'air alimenté par ladite soufflante (6) compris entre 0,1 et 30 secondes, de préférence entre 0,5 et 15 secondes, de préférence entre 1 et 5 secondes, , ledit flux d'air étant de préférence un flux d'air à température ambiante.

8. Procédé selon l'une quelconque des revendications précédentes, dans lequel ledit flux d'air est alimenté à co-courant ou à contre-courant par rapport à une direction de déplacement (22a, 22b) desdites pâtes formées ou est alimenté de manière non parallèle par rapport à une direction de déplacement desdites pâtes formées ou encore est alimenté pendant ledit premier déplacement (22a) et/ou ledit deuxième déplacement (22b) ou encore entre les premier (22a) et deuxième déplacements (22b).

9. Dispositif pour la fabrication de pâtes à partir d'ingrédients constitutifs comprenant :
- une zone de mise en forme (3) d'un mélange pour obtenir des pâtes formées,
- une zone de conditionnement (11) pour lesdites pâtes formées pour obtenir des pâtes conditionnées en portions prêtes à l'emploi, **caractérisé en ce que** ledit dispositif comprend en outre entre la zone de mise en forme (3) et la zone de conditionnement (11), une zone de transfert (22) des pâtes formées, ladite zone de transfert comprenant un premier tronçon (22a) et un deuxième tronçon (22b) présentant respectivement une première direction et une deuxième direction de déplacement de pâtes formées, ladite deuxième direction étant non parallèle à ladite première direction, ledit premier tronçon (22a) se trouvant en amont d'un moyen de butée tandis que le deuxième tronçon (22b) se trouve en aval dudit moyen de butée (7); ledit moyen de butée (7) étant agencé pour être mis en contact avec lesdits pâtes formées déplacées dans ledit premier tronçon (22a) et les orienter dans ledit deuxième tronçon (22b), et des moyens d'alimentation d'un flux d'air muni d'une soufflante (6) agencée pour souffler un flux d'air sur lesdites pâtes formées se déplaçant dans le premier tronçon (22a) et/ou le deuxième tronçon (22b) et/ou entre lesdits premier (22a) et deuxième tronçons (22b).

10. Dispositif selon la revendication 9, comprenant en outre une zone de mélange (1) pour lesdits ingrédients constitutifs.

11. Dispositif selon la revendication 9 ou la revendication 10, dans lequel ledit moyen de butée (7) comprend une paroi inclinée perforée (7) d'une série d'orifices traversants, lesdits orifices traversants étant agencés pour être traversé par ledit flux d'air.

12. Dispositif selon l'une quelconque des revendications 9 à 11, comprenant en outre une zone de cuisson (4) comprenant un premier bac d'eau chaude (4a) à une première température de cuisson pour obtenir des pâtes précuites ou des pâtes cuites, ainsi qu'un ou plusieurs équipements choisis parmi
(i) des moyens de transport (2) desdites pâtes formées, en amont du premier bac de cuisson (4a), lesdits moyens de transport (2) étant agencés pour amener lesdites pâtes formées au premier bac de cuisson (4a),
(iv) des moyens d'aspersions de liquide froid (4b) à une température comprise entre 4°C et 20°C, en aval du premier bac de cuisson (4a), disposés à proximité d'une bande de convoyage (2) agencée pour exposer lesdites pâtes précuites ou lesdites pâtes cuites à l'air ambiant ainsi qu'audit liquide froid,
(v) un deuxième bac d'eau froide (4c), en aval du premier bac de cuisson (4a), à une deuxième température inférieure à 10°C pour obtenir des pâtes précuites ou des pâtes cuites à une température inférieure à 10°C.
et dans lequel les moyens de transport en amont du premier bac de cuisson (4a) sont de préférence formés par une bande transporteuse (2) qui s'étend en aval de la zone de transfert (22) jusqu'à la zone de conditionnement (11), ladite bande transporteuse (2) traversant le premier bac de cuisson (4a), éventuellement le deuxième bac de cuisson (4c) et les moyens d'aspersions (4b) en y formant ladite bande de convoyage (2).

13. Dispositif selon l'une quelconque des revendications 9 à 12, dans lequel en amont de la zone de conditionnement (11), se trouve:
- une zone d'égouttage (30) pour obtenir des pâtes précuites ou des pâtes cuites égouttées, ladite zone d'égouttage (30) comprend une paroi perforée d'orifices, ladite zone d'égouttage (21) sépare une zone de rétention (28) agencée pour retenir lesdites pâtes précuites ou lesdites pâtes cuites sur ladite paroi perforée (7) d'orifices et une zone de collecte de liquide (29) agencée pour collecter les liquides après cuisson,
- une zone d'emballage (26) agencée pour obtenir des pâtes précuites ou des pâtes conditionnées en portions prêtes à l'emploi, ladite zone d'emballage (26) est dans une zone sous atmosphère protectrice (12), ladite zone d'emballage (26) est reliée à
- une zone de contrôle (27) desdites pâtes précuites ou des pâtes cuites conditionnées en portions prêtes à l'emploi comprenant des moyens de vérification tels qu'une balance, un détecteur de métal et/ou un oxymètre.

14. Dispositif selon la revendication 13, dans lequel la zone de conditionnement (11) comprend en outre une zone d'enrobage (18) reliée en aval de ladite zone de rétention (28) comprenant une vis sans fin agencée pour obtenir des pâtes précuites ou des pâtes cuites égouttées et enrobées uniformément et une zone de pasteurisation (19) reliée en aval de ladite zone de contrôle (27) desdites pâtes précuites ou des pâtes cuites conditionnées en portions prêtes à l'emploi pour conserver lesdites pâtes précuites ou pâtes cuites conditionnées.

15. Produit à base de pâtes fraîches, précuites ou cuites obtenu par le procédé selon l'une des revendications 1 à 13, contenant moins de 10% d'agglomérats de deux ou plus de deux pâtes, de préférence moins de 5% d'agglomérats de deux ou plus de deux pâtes, de préférence moins de 2% d'agglomérats de deux ou plus de deux pâtes, de préférence, conditionné en portion prête à l'emploi.
